# DEMANDE DE BREVET EUROPEEN

(11) **EP 4 546 150 A1**
(43) Date de publication de la demande: **30.04.2025**
(21) Numéro de dépôt: 24206324.6
(22) Date de dépôt: 14.10.2024
(51) Int. Cl.: G06F 15/167

(54) **OPTIMISATION DES TRANSFERTS DE DONNÉES ENTRE UN PROCESSEUR DE TRAITEMENT PARALLÈLE ET UNE MÉMOIRE**

(30) Priorité: 27.10.2023 FR 2311716
(71) Demandeur: Commissariat à l'Energie Atomique et aux Energies Alternatives, 75015 Paris (FR)
(72) Inventeur: TAIN, Benoit, 91191 GIF-SUR-YVETTE CEDEX (FR); MILLET, RAPHAEL, 91191 GIF-SUR-YVETTE CEDEX (FR)
(74) Mandataire: Brevalex

(57) **Abrégé**

Système (20) de calcul comportant une mémoire A (30), un module de contrôle d'accès mémoire (50), et un processeur de traitement parallèle (40) comportant une pluralité d'unités de calcul (41) comportant chacune une mémoire B partagée par un ou plusieurs processeurs élémentaires (43). Les unités de calcul sont agencées en colonne. Une partition (31) de la mémoire A est associée à chaque colonne. Des modules de connexion (60) sont connectés respectivement aux partitions de la mémoire A et aux mémoires B des unités de calcul (41). Au sein d'une colonne, les modules de connexion voisins sont reliés l'un à l'autre par un lien d'interface dédié (61). Le module de contrôle d'accès mémoire (50) est adapté pour configurer les modules de connexion (60) pour exécuter des transferts de données en parallèle dans plusieurs colonnes, chaque transfert permettant un échange de données au sein d'une colonne entre une partition de la mémoire A et une mémoire B d'au moins une unité de calcul.

## Description

### Domaine de l'invention

La présente invention appartient au domaine des systèmes de calcul comportant un processeur de traitement parallèle jouant le rôle d'accélérateur matériel. L'invention porte notamment sur une architecture particulière pour un tel système de calcul visant à optimiser les transferts de données entre le processeur de traitement parallèle et une mémoire externe audit processeur.

### Etat de la technique

Dans le domaine de l'intelligence artificielle, et plus particulièrement dans le contexte des réseaux de neurones profonds, la problématique des déplacements de données revêt une grande importance. Les réseaux de neurones profonds sont des modèles d'apprentissage automatique qui nécessitent un volume considérable de données pour effectuer des tâches complexes telles que la reconnaissance d'images, la détection d'objets, ou la détection d'anomalies.

Le déplacement de données fait référence à la manipulation et au transfert de ces données d'un emplacement mémoire à un autre. Cela pose un certain nombre de défis dans le contexte des réseaux de neurones profonds. Le volume massif de données utilisées par ces modèles nécessite des ressources de stockage et de traitement adéquates pour gérer efficacement les opérations de déplacement. Les données doivent être transférées de manière rapide et fiable afin de minimiser les temps d'attente et optimiser les performances du réseau de neurones.

Le problème du déplacement de données dans les systèmes embarqués présente des défis supplémentaires. En effet, les systèmes embarqués, tels que les dispositifs loT (« Internet of Things », en français « Internet des objets »), les véhicules autonomes ou les drones, sont caractérisés par leurs ressources limitées en termes de puissance de calcul, de mémoire et d'énergie. Dans ce contexte, le déplacement efficace des données devient crucial pour garantir des performances optimales et une utilisation efficace des ressources. Un autre défi important est la gestion de l'énergie dans les systèmes embarqués. Les ressources énergétiques étant limitées, il est crucial de minimiser la consommation d'énergie lors du déplacement des données.

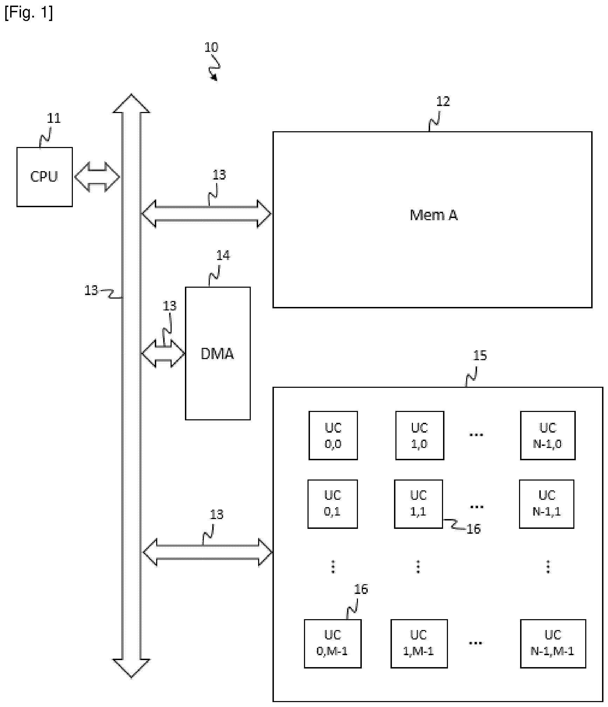

La figure 1 représente schématiquement un système 10 de calcul conventionnel permettant de traiter un grand nombre de données en parallèle. Un tel système 10 de calcul peut notamment être utilisé pour mettre en oeuvre un algorithme basé sur un réseau de neurones profonds.

Tel qu'illustré sur la figure 1, le système 10 de calcul comporte un processeur hôte 11, un processeur de traitement parallèle 15, une mémoire 12 (mémoire A, ou « Mem A »), un bus d'interconnexion 13, et un module de contrôle d'accès mémoire 14.

Le processeur hôte 11 correspond à une unité centrale de traitement (CPU, pour « Central Processing Unit »). Le processeur hôte 11 gère l'exécution générale du système, y compris la communication avec le processeur de traitement parallèle 15. Le processeur de traitement parallèle 15 joue le rôle d'accélérateur matériel ; c'est un composant conçu spécifiquement pour effectuer des opérations de calcul intensif pour des algorithmes d'apprentissage automatique. Le processeur de traitement parallèle 15 comporte une pluralité d'unités de calcul 16 (UC). Chaque unité de calcul 16 comporte un ou plusieurs processeurs élémentaires et une mémoire (mémoire B ou Mem B) partagée par les processeurs élémentaires.

Dans le cas des systèmes embarqués, la mémoire A peut correspondre à la mémoire principale du système. Cette mémoire est généralement qualifiée de mémoire de niveau 2 (mémoire L2). Les mémoires B des unités de calcul distribuées dans le processeur de traitement parallèle sont alors généralement qualifiées de mémoire de niveau 1 (mémoire L1).

Le bus d'interconnexion 13 permet de procéder à des échanges de données entre le processeur hôte 11, la mémoire 12 et le processeur de traitement parallèle 15, et aussi éventuellement avec d'autres composants du système.

Le module de contrôle d'accès mémoire 14 (DMA, pour « Direct Memory Access ») permet de transférer des données entre le processeur de traitement parallèle 15 (ou éventuellement un autre composant du système) et la mémoire 12 sans l'intervention directe du processeur hôte 11.

Le DMA est un élément clé, car il permet d'exploiter au mieux le débit du bus d'interconnexion. Dans un système conventionnel, lorsqu'un périphérique externe souhaite transférer des données vers la mémoire A, ou en provenance de celle-ci, cela nécessite généralement l'intervention du processeur hôte. Le processeur hôte doit lire ou écrire les données de manière séquentielle, et cela peut créer un goulot d'étranglement et une utilisation inefficace du processeur hôte et du bus d'interconnexion.

Le DMA permet de contourner cette limitation en offrant une voie directe pour les transferts de données entre les périphériques et la mémoire A sans passer par le processeur hôte à chaque étape. Le DMA embarque généralement un contrôleur dédié qui prend en charge les opérations de transfert.

Lorsqu'un périphérique souhaite transférer des données, il envoie une requête au DMA. Celui-ci accède ensuite à la mémoire A via le bus d'interconnexion et effectue le transfert de données demandé entre le périphérique et la mémoire A, sans nécessiter une intervention du processeur hôte. Une fois le transfert terminé, le DMA peut générer une interruption pour informer le processeur hôte de la fin de l'opération.

L'utilisation du DMA présente plusieurs avantages. Tout d'abord, elle réduit la charge de travail du processeur hôte. Le processeur hôte peut ainsi se consacrer à d'autres tâches critiques. De plus, les transferts de données via DMA sont généralement plus rapides que ceux effectués par le processeur hôte. Cela améliore les performances globales du système. Enfin, le DMA permet une gestion plus efficace de la mémoire A, en évitant les blocages et en optimisant les transferts de données entre les périphériques et la mémoire A.

Cependant, malgré tous ces avantages, le débit maximal théorique atteignable reste directement lié à la largeur du bus d'interconnexion. Le débit maximal est dans le meilleur des cas égal à la largeur du bus d'interconnexion multiplié par la fréquence de fonctionnement du système. De façon conventionnelle, la mémoire A du système 10 de calcul illustré à la figure 1 est une mémoire unifiée, avec une seule interface d'accès connectée au bus d'interconnexion. Ceci crée un goulot d'étranglement au niveau de l'accès à la mémoire A, et une limitation du débit pour les transferts de données entre la mémoire A et les mémoires B distribuées au sein du processeur de traitement parallèle 15. En particulier, quand des données doivent être transférées depuis plusieurs mémoires B vers la mémoire A, il faudra que le DMA lance séquentiellement une série de transferts depuis chaque mémoire B, l'une après l'autre, vers la mémoire A.

### Exposé de l'invention

La présente invention a pour objectif de remédier à tout ou partie des inconvénients de l'art antérieur.

A cet effet, et selon un premier aspect, il est proposé par la présente invention un système de calcul comportant une mémoire, dite « mémoire A », un module de contrôle d'accès mémoire, et un processeur de traitement parallèle comportant une pluralité d'unités de calcul. Chaque unité de calcul comporte un ou plusieurs processeurs élémentaires et une mémoire, dite « mémoire B », partagée par lesdits processeurs élémentaires. Les unités de calcul du processeur de traitement parallèle sont agencées en plusieurs colonnes et, dans chaque colonne, les unités de calcul sont ordonnées d'une première unité de calcul jusqu'à une dernière unité de calcul, avec zéro, une ou plusieurs unités de calcul intermédiaires entre la première unité de calcul et la dernière unité de calcul. La première unité de calcul correspond à la dernière unité de calcul lorsque la colonne ne comporte qu'une seule unité de calcul.

La mémoire A est partitionnée de sorte à associer une partition de la mémoire A à chaque colonne d'unités de calcul et, pour chaque colonne, le système de calcul comporte des modules de connexion ordonnés d'un premier module de connexion connecté à la partition de la mémoire A, jusqu'à un dernier module de connexion connecté à la mémoire B de la dernière unité de calcul, avec zéro, un ou plusieurs modules de connexion intermédiaires entre le premier module de connexion et le dernier module de connexion, chaque module de connexion intermédiaire étant connecté à la mémoire B d'une unité de calcul.

Le premier module de connexion présente un lien d'interface dédié avec le module de connexion suivant, chaque module de connexion intermédiaire présente un lien d'interface dédié d'une part avec le module de connexion précédent et d'autre part avec le module de connexion suivant, le dernier module de connexion présente un lien d'interface dédié avec le module de connexion précédent.

Le module de contrôle d'accès mémoire est adapté pour configurer les modules de connexion pour faire un premier transfert de données, pour une première colonne, entre la partition de la mémoire A associée à ladite première colonne et une mémoire B d'au moins une unité de calcul de ladite première colonne et, simultanément au premier transfert, faire au moins un deuxième transfert de données, pour une deuxième colonne, entre la partition de la mémoire A associée à ladite deuxième colonne et une mémoire B d'au moins une unité de calcul de ladite deuxième colonne.

Le premier transfert de données et le deuxième transfert de données sont effectués en passant par les liens d'interface dédiés reliant les modules de connexion entre eux.

L'invention repose ainsi sur un découpage de la mémoire A en plusieurs partitions présentant un agencement en colonne similaire à celui des mémoires B embarquées dans le processeur de traitement parallèle (« symétrie colonne » entre les partitions de la mémoire A et les mémoire B distribuées). Les transferts de données peuvent s'opérer en parallèle dans différentes colonnes via les modules de connexion.

Le partitionnement de la mémoire A permet en effet de multiplier les interfaces d'accès aux différentes partitions et donne l'opportunité de transferts en parallèle avec les mémoires B distribuées. Le taux de transfert est ainsi multiplié par le nombre de colonnes défini dans l'agencement choisi.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le premier transfert de données permet de transférer des données de la partition de la mémoire A associée à la première colonne vers les mémoires B de plusieurs unités de calcul différentes de la première colonne, en passant au plus une fois par le module de connexion de chaque unité de calcul de la première colonne.

De telles dispositions permettent de diffuser (« broadcast ») des données d'une partition de la mémoire A vers les mémoires B de plusieurs unités de calcul de la colonne associée à la partition, avec un unique transfert en provenance de la mémoire A.

Dans des modes particuliers de réalisation, le module de contrôle d'accès mémoire est adapté pour configurer les modules de connexion pour faire un transfert de données, pour au moins une colonne, depuis une mémoire B d'une unité de calcul de ladite colonne vers une mémoire B d'au moins une autre unité de calcul de ladite colonne.

Les modules de connexion peuvent ainsi également permettre un transfert de données entre les mémoires B de différentes unités de calcul d'une même colonne (sans nécessairement impliquer la mémoire A).

Dans des modes particuliers de réalisation, le module de contrôle d'accès mémoire est adapté pour configurer les modules de connexion pour faire des transferts de données simultanés impliquant plusieurs colonnes avec, pour chaque colonne impliquée, un transfert de données d'une région de la partition située à une adresse locale de source identique pour toutes les colonnes impliquées, vers une région d'une mémoire B d'au moins une unité de calcul, ladite région étant située à une adresse locale de destination identique pour toutes les colonnes impliquées.

Dans des modes particuliers de réalisation, le module de contrôle d'accès mémoire est adapté pour configurer les modules de connexion pour faire des transferts de données simultanés impliquant plusieurs colonnes avec, pour chaque colonne impliquée, un transfert de données d'une région d'une mémoire B d'une unité de calcul, ladite région étant située à une adresse locale de source identique pour toutes les colonnes impliquées, vers une région de la partition située à une adresse locale de destination identique pour toutes les colonnes impliquées.

En d'autres termes, les modules de connexion d'une même ligne peuvent être configurés de façon identique pour paralléliser des transferts de données similaires (avec une même adresse locale de source et une même adresse locale de destination) dans différentes colonnes.

Dans des modes particuliers de réalisation, chaque module de connexion intermédiaire comporte un bloc de routage supérieur et un bloc de routage inférieur. Le bloc de routage supérieur peut être configuré dans les modes suivants :
- « Lecture » : pour lire des données dans la mémoire B à laquelle le module de connexion intermédiaire est connecté et transmettre les données lues au module de connexion précédent, ou
- « Ecriture » : pour recevoir des données du module de connexion précédent et écrire les données reçues dans la mémoire B à laquelle le module de connexion intermédiaire est connecté, ou
- « Défaut » : pour recevoir des données du module de connexion précédent et transférer les données reçues vers le bloc de routage inférieur du module de connexion intermédiaire,

Le bloc de routage inférieur peut être configuré dans les modes suivants :
- « Lecture » : pour lire des données dans la mémoire B à laquelle le module de connexion intermédiaire est connecté et transmettre les données lues au module de connexion suivant, ou
- « Ecriture » : pour recevoir des données du module de connexion suivant et écrire les données reçues dans la mémoire B à laquelle le module de connexion intermédiaire est connecté, ou
- « Défaut » : pour recevoir des données du module de connexion suivant et transférer les données reçues vers le bloc de routage supérieur du module de connexion intermédiaire.

Dans des modes particuliers de réalisation, le premier module de connexion comporte un bloc de routage inférieur pouvant être configuré dans les modes suivants :
- « Lecture » : pour lire des données dans la mémoire A et transmettre les données lues au module de connexion suivant,
- « Ecriture » : pour recevoir des données du module de connexion suivant et écrire des données reçues dans la mémoire A ;

Le dernier module de connexion comporte un bloc de routage supérieur pouvant être configuré dans les modes suivants :
- « Lecture » : pour lire des données dans la mémoire B du dernier module de connexion et transmettre les données lues au module de connexion précédent,
- « Ecriture » : pour recevoir des données du module de connexion précédent et écrire les données reçues dans la mémoire B du dernier module de connexion.

Dans des modes particuliers de réalisation, le module de contrôle d'accès mémoire comporte au moins deux modules de contrôle, chaque module de contrôle étant adapté pour configurer de façon identique tous les modules de connexion présentant un même rang d'ordonnancement dans les différentes colonnes.

Dans des modes particuliers de réalisation, les modules de connexion sont tous implémentés de façon identique, et les modules de contrôle sont tous implémentés de façon identique.

Dans des modes particuliers de réalisation, le système de calcul comprend un processeur hôte et un bus d'interconnexion, et la mémoire A comprend des instructions de code de programme pour configurer le processeur hôte. Les partitions de la mémoire A sont définies avec un mappage d'adresse contigüe de telle sorte que les instructions de code de programme sont mémorisées dans une région de la mémoire A distincte des partitions.

En définissant un mappage d'adresse contiguë au niveau des partitions de la mémoire A, on conserve la possibilité d'un accès global à la mémoire A via le bus d'interconnexion, comme si elle était unifiée.

Dans des modes particuliers de réalisation, le système de calcul comprend un processeur hôte et un bus d'interconnexion. Le processeur hôte est adapté pour configurer le module de contrôle d'accès mémoire pour échanger des données avec la mémoire A ou avec une mémoire B d'au moins une unité de calcul du processeur de traitement parallèle, en passant par le bus d'interconnexion, sans passer par un lien d'interface dédié reliant deux modules de connexion voisins. Chaque module de connexion comporte un module d'arbitrage pour gérer une priorité d'accès à la mémoire à laquelle le module de connexion est connecté, entre:
- un transfert « dédié » impliquant un module de connexion voisin, et
- un transfert « bus » impliquant le bus d'interconnexion.

De telles dispositions permettent de gérer la coexistence de transferts « dédiés » (transferts opérés via les modules de connexion, sans impliquer le bus d'interconnexion) et de transferts « bus » (transferts opérés via le bus d'interconnexion, sans impliquer les liens d'interface reliant les modules de connexion entre eux).

### Présentation des figures

L'invention sera mieux comprise à la lecture de la description suivante, donnée à titre d'exemple nullement limitatif, et faite en se référant aux figures 1 à 20 qui représentent :
[Fig. 1] une représentation schématique d'un système de calcul conventionnel,
[Fig. 2] une représentation schématique d'un système de calcul selon l'invention,
[Fig. 3] une représentation schématique d'une unité de calcul du processeur de traitement parallèle du système de calcul de la figure 2,
[Fig. 4] une illustration (première partie) d'un transfert de données depuis les mémoires distribuées du processeur de traitement parallèle vers la mémoire A du système de calcul,
[Fig. 5] une illustration (deuxième partie) d'un transfert de données depuis les mémoires B distribuées du processeur de traitement parallèle vers la mémoire A du système de calcul,
[Fig. 6] un exemple de mappage d'adresse mémoire de la mémoire A du système 20 de calcul (exemple avec quarante-huit unités de calcul agencées en huit colonnes et six lignes),
[Fig. 7] une représentation schématique d'un module de connexion,
[Fig. 8] une autre représentation schématique d'un module de connexion,
[Fig. 9] une autre représentation schématique d'un module de connexion,
[Fig. 10] une représentation schématique du module de contrôle d'accès mémoire,
[Fig. 11] une illustration de la configuration des différents modules de connexion par les modules de contrôle du module de contrôle d'accès mémoire,
[Fig. 12] une représentation schématique des champs formant une adresse source ou une adresse destination,
[Fig. 13] une représentation schématique d'un module de contrôle du module de contrôle d'accès mémoire,
[Fig. 14] une représentation schématique d'un module de routage selon un premier mode de réalisation,
[Fig. 15] une représente schématique d'un bloc de routage supérieur ou inférieur selon un deuxième mode de réalisation,
[Fig. 16] une représente schématique d'un module de connexion intermédiaire selon le deuxième mode de réalisation,
[Fig. 17] une représente schématique d'un module de connexion en tête de colonne selon le deuxième mode de réalisation,
[Fig. 18] une représente schématique d'un module de connexion en pied de colonne selon le deuxième mode de réalisation,
[Fig. 19] une représente schématique d'un module de contrôle pour configurer un module de connexion en tête ou en pied de colonne selon le deuxième mode de réalisation,
[Fig. 20] une illustration de la configuration de trois modules de connexion d'une colonne selon le deuxième mode de réalisation.

Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée de l'invention

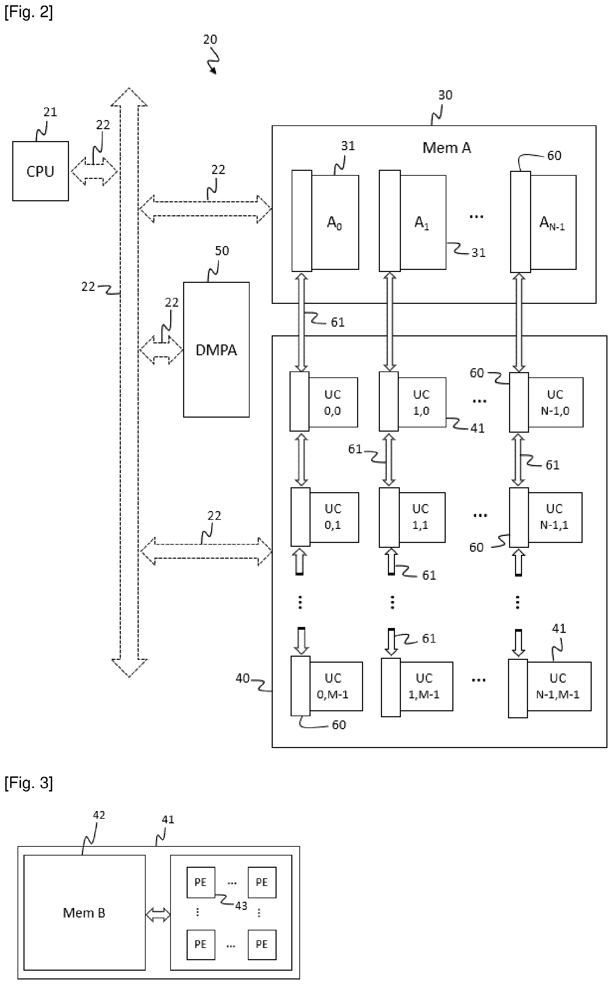

La figure 2 représente un exemple de réalisation d'un système 20 de calcul selon l'invention. On se place, à titre d'exemple nullement limitatif, dans le cas d'un système 20 de calcul embarqué permettant d'exécuter un traitement d'intelligence artificielle (par exemple un algorithme d'apprentissage automatique) nécessitant le traitement d'un grand nombre de données. Il peut s'agir par exemple d'un algorithme basé sur un réseau de neurones profond pour effectuer des tâches de traitement d'images (reconnaissance d'images, détection d'objets, détection d'anomalies, etc.).

De façon similaire au système 10 de calcul conventionnel décrit en référence à la figure 1, le système 20 de calcul comporte un processeur hôte 21, un processeur de traitement parallèle 40, une mémoire 30, ci-après « mémoire A » (Mem A), un bus d'interconnexion 22, et un module de contrôle d'accès mémoire 50 (DMPA pour « Direct Memory Parallel Access »).

Tel qu'illustré sur la figure 3, chaque unité de calcul 41 comporte un ou plusieurs processeurs élémentaires 43 (PE) et une mémoire 42, ci-après « mémoire B » (Mem B), partagée par ces processeurs élémentaires 43.

Les unités de calcul 41 (UC) du processeur de traitement parallèle 40 sont agencées de façon matricielle en N colonnes et M lignes (N étant un entier supérieur ou égal à deux, et M un entier supérieur ou égal à un). Dans chaque colonne, les unités de calcul 41 sont ordonnées d'une première unité de calcul jusqu'à une dernière unité de calcul, avec zéro, une ou plusieurs unités de calcul intermédiaires entre la première unité de calcul et la dernière unité de calcul. Pour une colonne d'indice i (i étant un indice variant entre 0 et N-1), les unités de calcul sont notées UC_{i,j} (j étant un indice variant entre 0 et M-1) ; la première unité de calcul 41 de la colonne correspond à l'unité de calcul UC_{i,0} ; la dernière unité de calcul 41 de la colonne correspond à l'unité de calcul UC_{i,M-1} ; les unités de calcul intermédiaires correspondent aux unités de calcul UC_{i,j} avec j variant entre 1 et M-2). Lorsque la colonne ne comporte qu'une seule unité de calcul (M=1), alors la première unité de calcul et la dernière unité de calcul de la colonne correspondent à une seule et même unité de calcul.

Dans l'exemple considérée, la mémoire A correspond à la mémoire principale du système. Cette mémoire est généralement qualifiée de mémoire de niveau 2 (mémoire L2). Les mémoires B des unités de calcul distribuées dans le processeur de traitement parallèle 40 sont généralement qualifiées de mémoire de niveau 1 (mémoire L1).

Le processeur hôte 21 (CPU) gère l'exécution générale du système, y compris la communication avec le processeur de traitement parallèle 40. Le processeur de traitement parallèle 40 joue le rôle d'accélérateur matériel : il est conçu spécifiquement pour pouvoir effectuer des opérations de calcul intensif pour exécuter l'algorithme d'apprentissage automatique. En particulier, les différentes unités de calcul UC_{i,j} peuvent travailler en parallèle pour optimiser les performances du système.

De façon conventionnelle, le bus d'interconnexion 22 peut permettre de procéder à des échanges de données entre le processeur hôte 21, la mémoire 30 et le processeur de traitement parallèle 40, et aussi éventuellement avec d'autres composants du système.

L'invention repose sur un découpage de la mémoire A en plusieurs partitions avec un agencement en colonne similaire à celui des mémoires B embarquées dans le processeur de traitement parallèle 40 (« symétrie colonne » entre les partitions de la mémoire A et les mémoire B distribuées). Ce partitionnement permet de multiplier les interfaces d'accès à la mémoire et donne l'opportunité de transferts en parallèle avec les mémoires B distribuées.

Pour permettre ces transferts en parallèle dans les différentes colonnes, la mémoire A est partitionnée en N partitions (autant de partitions que de colonnes d'unités de calcul). Sur la figure 2, les partitions sont notées Aᵢ, avec i variant entre 0 et (N-1). Chaque partition de la mémoire A est associée à une colonne d'unités de calcul 41. Pour une colonne d'indice i, le système 20 de calcul comporte des modules de connexion 60 ordonnés d'un premier module de connexion connecté à la partition Aᵢ, jusqu'à un dernier module de connexion connecté à la mémoire B de la dernière unité de calcul UC_{i,M-1}. Zéro, un ou plusieurs modules de connexion intermédiaires peuvent être positionnés entre le premier module de connexion et le dernier module de connexion. Chaque module de connexion intermédiaire est connecté à la mémoire B d'une unité de calcul UC_{i,j} avec j variant entre 0 et (M-2).

Il convient de noter que la connexion entre un module de connexion 60 et la partition de mémoire A ou la mémoire B qui lui est associée est une connexion directe (sans composant intermédiaire).

Les modules de connexion 60 d'une colonne d'indice i peuvent donc être ordonnés avec un indice k variant entre 0 et M : le premier module de connexion 60, d'indice 0, est associé à la partition 31 de la mémoire A ; le deuxième module de connexion 60, d'indice 1, est associé à la première unité de calcul UC_{i,0} de la colonne ; ... ; le dernier module de connexion 60 d'indice M est associé à la dernière unité de calcul UC_{i,M-1} de la colonne. Pour un module de connexion 60 d'indice k, avec k compris entre 1 et (M-1), le module de connexion précédent correspond au module de connexion d'indice (k-1), et le module de connexion suivant correspond au module de connexion d'indice (k+1).

Tel qu'illustré sur la figure 2, le premier module de connexion (celui qui est associé à la partition de la mémoire A) présente un lien d'interface dédié 61 avec le module de connexion suivant (celui qui est associé à la première unité de calcul de la colonne). Chaque module de connexion intermédiaire présente un lien d'interface dédié 61 d'une part avec le module de connexion précédent et d'autre part avec le module de connexion suivant. Le dernier module de connexion présente un lien d'interface dédié 61 avec le module de connexion précédent.

Le module de contrôle d'accès mémoire 50 est adapté pour configurer les modules de connexion 60 pour faire des transferts de données en parallèle dans au moins deux colonnes différentes. Le module de contrôle d'accès mémoire 50 peut notamment être configuré par le processeur hôte 21 ; dans une variante, le module de contrôle d'accès mémoire 50 peut être configuré par le processeur de traitement parallèle 40.

Par exemple, le module de contrôle d'accès mémoire 50 est adapté pour configurer les modules de connexion 60 pour faire un premier transfert de données, au sein d'une colonne d'indice p, avec p compris entre 0 et (N-1), entre la partition Aₚ et une mémoire B d'au moins une unité de calcul 41 de la colonne d'indice p et, simultanément au premier transfert, faire au moins un deuxième transfert de données, au sein d'une colonne d'indice q, avec q compris entre 0 et (N-1) et différent de p, entre la partition A_{q} et une mémoire B d'au moins une unité de calcul 41 de la colonne d'indice q.

Pour chaque transfert de données au sein d'une colonne, les données passent par les liens d'interface dédiés 61 reliant les différents modules de connexion 60 entre eux, sans passer par le bus d'interconnexion 22. Les liens d'interface dédiés 61 sont bidirectionnels, ils présentent chacun un lien montant et un lien descendant.

Un transfert de données au sein d'une colonne est un transfert de données « dédié », c'est-à-dire un transfert de données passant par des modules de connexion et des liens d'interface dédiés. Un transfert de données « dédié » est effectué en passant par les liens d'interface dédiés reliant entre eux le module de connexion dont la mémoire associée (partition de mémoire A pour un premier module de connexion d'une colonne, ou mémoire B pour un module de connexion intermédiaire ou pour un dernier module de connexion d'une colonne) est à l'origine du transfert et le module de connexion associée à la mémoire qui est destinataire du transfert, en passant par les modules de connexion intermédiaires qui les séparent (s'il y en a).

Un transfert de données au sein d'une colonne est associé à une adresse de source (adresse dans la mémoire à l'origine du transfert) et une adresse de destination (adresse dans la mémoire qui est destinataire du transfert) configurées par le module de contrôle d'accès mémoire 50.

Selon un premier exemple, un transfert de données au sein d'une colonne peut avoir pour origine (source) la partition de la mémoire A et pour destinataire la mémoire B d'au moins une unité de calcul 41 de la colonne (on parle alors de transfert « descendant »). Selon un deuxième exemple, un transfert de données au sein d'une colonne peut avoir pour origine la mémoire B d'une unité de calcul 41 de la colonne et pour destinataire la partition de la mémoire A (on parle alors de transfert « montant »). Selon un troisième exemple, un transfert de données au sein d'une colonne peut avoir pour origine la mémoire B d'une unité de calcul 41 et pour destinataire la mémoire B d'au moins une autre unité de calcul de la colonne (le transfert peut alors être montant ou descendant). Selon encore un autre exemple, un transfert de données au sein d'une colonne peut avoir pour origine la mémoire B d'une unité de calcul 41 et pour destinataires à la fois la partition de la mémoire A et la mémoire B d'au moins une autre unité de calcul de la colonne.

De façon avantageuse, lorsqu'un transfert de données au sein d'une colonne a pour origine la partition de la mémoire A et pour destinataires les mémoires B de plusieurs unités de calcul 41 de la colonne, les données transférées passent au plus une fois par le module de connexion 60 de chaque unité de calcul 41 de la colonne.

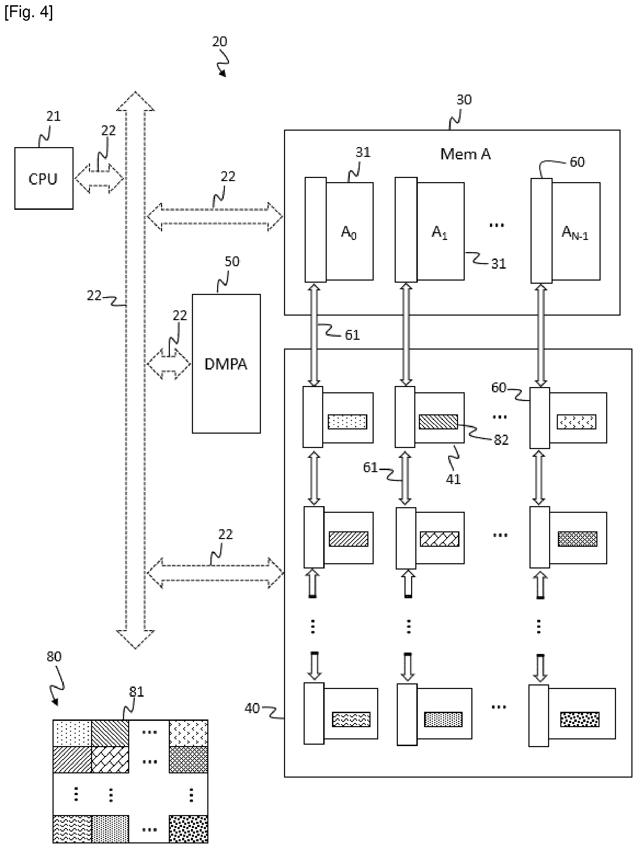

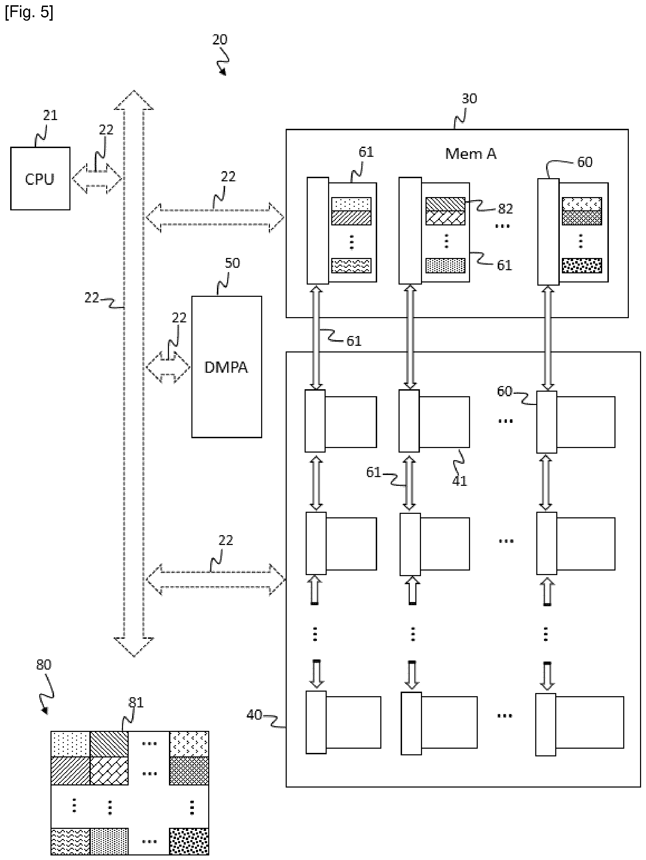

De façon avantageuse, et tel qu'illustré sur les figures 4 et 5, le module de contrôle d'accès mémoire 50 peut être adapté pour configurer les modules de connexion 60 pour faire des transferts de données simultanés impliquant plusieurs colonnes avec, pour chaque colonne impliquée, un transfert de données d'une région d'une mémoire B d'une unité de calcul 41, ladite région étant située à une adresse locale de source identique pour toutes les colonnes impliquées, vers une région de la partition 31 située à une adresse locale de destination identique pour toutes les colonnes impliquées.

Dans l'exemple illustré sur les figures 4 et 5, les unités de calcul 41 du processeur de traitement parallèle 40 sont utilisées pour traiter les pixels d'une image 80. L'image 80 est découpée de façon matricielle en autant de zones 81 de pixels qu'il y a d'unités de calcul 41 (l'image est donc découpée en N colonnes et M lignes). Les données associées à chaque zone 81 de pixels de l'image 80 sont traitées par une unité de calcul. Il est possible de déplacer les données traitées 82 par chaque unité de calcul 41 d'une même ligne vers la mémoire A de façon simultanée, en effectuant des transferts en parallèle dans les N colonnes. L'ensemble des données traitées 82 par les différentes unités de calcul 41 d'une même ligne sont toutes mémorisées à une même adresse locale dans les différentes partitions de la mémoire A. En répétant cette opération M fois (ligne par ligne), l'ensemble de toutes les données traitées par les unités de calcul 41 du processeur de traitement parallèle 40 peuvent alors être déplacées vers la mémoire A, comme illustré sur la figure 5.

Sur une application de type réseau de neurones, et notamment pour un réseau neuronal résiduel, le fait d'avoir plusieurs branches dans le graphe modélisant le réseau de neurones implique la nécessité de sauvegarder les données à la séparation de branches et à les recharger ultérieurement lors de la fusion de branches. Le système 20 de calcul selon l'invention permet la sauvegarde de données des mémoires B vers les partitions de la mémoire A (dans le sens montant), ceci en parallèle pour les N colonnes. Une partition de la mémoire A est elle-même découpée en plusieurs régions, chaque région étant associée à une mémoire B de la colonne et identifiée par un offset.

De façon similaire, le chargement des données nécessaires au moment de la fusion de branches sera effectué en parallèle sur les différentes colonnes (dans le sens descendant). Dans ce but, le module de contrôle d'accès mémoire 50 peut être adapté pour configurer les modules de connexion 60 pour faire des transferts de données simultanés impliquant plusieurs colonnes avec, pour chaque colonne impliquée, un transfert de données d'une région de la partition 31 située à une adresse locale de source identique pour toutes les colonnes impliquées, vers une région d'une mémoire B d'au moins une unité de calcul 41, ladite région étant située à une adresse locale de destination identique pour toutes les colonnes impliquées.

Le taux de transfert est ainsi multiplié par le nombre de colonnes dans l'agencement choisi. Supposons par exemple que les liens d'interface dédiés 61 présentent une largeur de données de soixante-quatre bits. Si on considère un processeur de traitement parallèle 40 comportant vingt-quatre unités de calcul 41 agencées en quatre colonnes et six lignes, alors le taux de transfert est de 256 bits/cycle (4 × 64 = 256). Si on considère un processeur de traitement parallèle 40 comportant quarante-huit unités de calcul 41 agencées en huit colonnes et six lignes, alors le taux de transfert est de 512 bits/cycle (8 × 64 = 512). Si on considère un processeur de traitement parallèle 40 comportant soixante-quatre unités de calcul 41 agencées en seize colonnes et quatre lignes, alors le taux de transfert est de 1024 bits/cycle (16 × 64 = 1024).

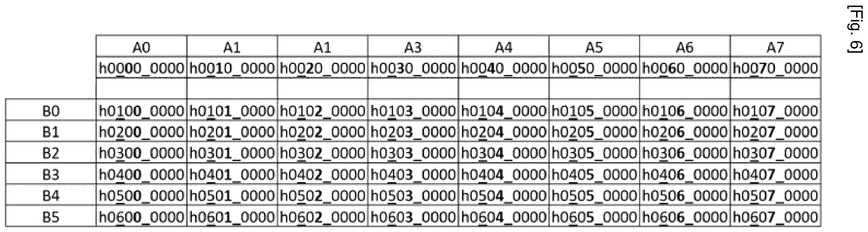

La figure 6 illustre un exemple de mappage d'adresse de la mémoire A pour un système 20 de calcul avec un processeur de traitement parallèle 40 comportant quarante-huit unités de calcul 41 agencées en huit colonnes et six lignes. Pour chaque partition A₀ à A₇ associée à une colonne, des régions mémoire sont réservées pour chacune des six unités de calcul 41 de la colonne (B₀, B₁, ..., B₆). Les adresses mémoires sont représentées en hexadécimal. Pour chaque adresse, le champ formé par les seize bits de poids faible représente une plage d'adresse locale ; le champ représenté en caractère gras permet de coder la position de la colonne ; le champ souligné permet de coder la position de la ligne.

Les partitions 31 de la mémoire A sont avantageusement définies avec un mappage d'adresse contigüe. Cela permet notamment un accès unifié via le bus d'interconnexion 22. Ainsi, le processeur hôte 21 peut utiliser la mémoire A comme une mémoire unifiée. Cet accès depuis de bus d'interconnexion 22 est particulièrement intéressant dans le cas des systèmes embarqués, pour lesquels la mémoire A peut correspondre à la mémoire principale du processeur hôte 21. Cette mémoire principale peut contenir le code exécutable ainsi que les données nécessaires à l'exécution du processeur hôte 21. Un fichier de script de liaison est généralement utilisé par le compilateur pour organiser les différentes sections de code et de données dans la mémoire lors de la création d'un exécutable. Des sections spécifiques (distinctes de celles mémorisant le code exécutable du processeur hôte) peuvent alors être ajoutées dans ce fichier de script, notamment pour définir des sections dédiées à l'échange de données entre la mémoire A et les mémoires B distribuées, ou des sections dédiées aux paramètres d'un réseau de neurone.

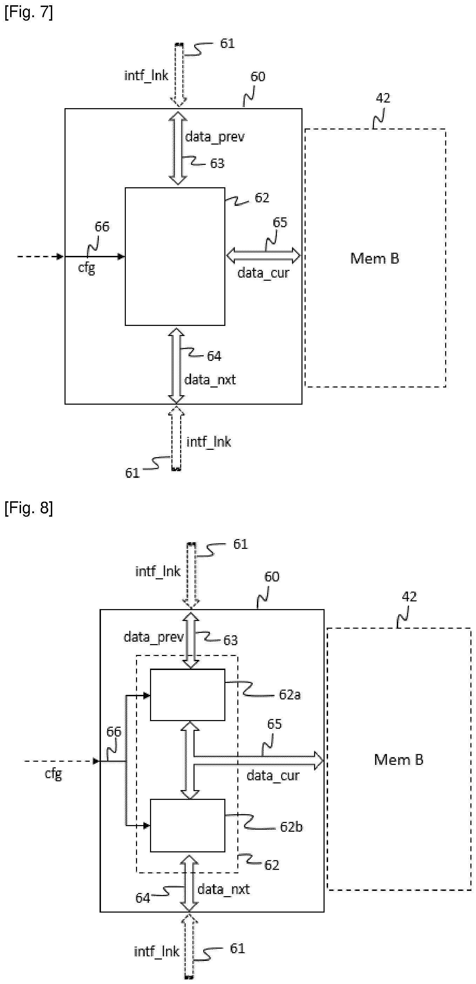

La figure 7 représente schématiquement un exemple de réalisation d'un module de connexion 60. Tel qu'illustré sur la figure 7, le module de connexion 60 comporte un module de routage 62 permettant d'échanger des données avec un autre module de connexion 60 de la même colonne. Un lien de configuration 66 (lien cfg) permet au module de contrôle d'accès mémoire 50 (DMPA) de configurer le module de routage 62 du module de connexion 60. Le module de connexion 60 comporte un lien de routage 63 bidirectionnel avec le module de connexion précédent (lien data_prev), un lien de routage 64 bidirectionnel avec le module de connexion suivant (lien data_nxt), et un lien de routage 65 bidirectionnel avec la mémoire à laquelle il est connecté (lien data_cur, lien de routage avec la mémoire du module de connexion courant). Chaque lien bidirectionnel comporte un lien montant et un lien descendant. Le lien data_prev (respectivement le lien data_nxt) peut être connecté à un lien d'interface dédié 61 pour échanger des données avec le module de connexion précédent (respectivement avec le module de connexion suivant).

Dans l'exemple illustré à la figure 7, le module de connexion 60 est connecté à la mémoire 42 d'une unité de calcul 41 (mémoire B). Selon un autre exemple (pour le premier module de connexion de la colonne), le module de connexion 60 pourrait être connecté à une partition 31 de la mémoire A ; dans ce cas il n'y aurait pas de lien d'interface dédié 61 relié au lien de routage 63 data_prev. Si le module de connexion 60 correspond au dernier module de connexion de la colonne, alors il n'y a pas de lien d'interface dédié 61 relié au lien de routage 64 data_nxt.

Pour écrire des données provenant du module de connexion précédent dans la mémoire 42 associée au module de connexion 60 courant, les données passent par le lien descendant du lien de routage 63 data_prev, puis par le lien montant du lien de routage 65 data_cur.

Pour écrire des données provenant du module de connexion suivant dans la mémoire 42 associée au module de connexion 60 courant, les données passent par le lien montant du lien de routage 64 data_nxt, puis par le lien montant du lien de routage 65 data_cur.

Pour transmettre des données lues dans la mémoire 42 associée au module de connexion 60 courant vers le module de connexion précédent, les données passent par le lien descendant du lien de routage 65 data_cur, puis par le lien montant du lien de routage 63 data_prev.

Pour transmettre des données lues dans la mémoire 42 associée au module de connexion 60 courant vers le module de connexion suivant, les données passent par le lien descendant du lien de routage 65 data_cur, puis par le lien descendant du lien de routage 64 data_nxt.

Le module de routage 62 peut également être configuré pour router des données provenant du module de connexion précédent vers le module suivant sans faire de lecture ou d'écriture dans la mémoire 42 associée au module de connexion 60 courant (dans ce cas les données passent par le lien descendant du lien de routage 63 data_prev puis par le lien descendant du lien de routage 64 data_nxt). De façon similaire, le module de routage 62 peut être configuré pour router des données provenant du module de connexion suivant vers le module précédent sans faire de lecture ou d'écriture dans la mémoire 42 associée au module de connexion 60 courant (dans ce cas les données passent par le lien montant du lien de routage 64 data_nxt puis par le lien montant du lien de routage 63 data_prev).

Dans des modes particuliers de réalisation, et tel qu'illustré à titre d'exemple sur la figure 8, le module de routage 62 peut comporter un bloc de routage supérieur 62a et un bloc de routage inférieur 62b.

Le bloc de routage supérieur 62a peut être configuré dans les modes suivants :
- « Lecture » : pour lire des données dans la mémoire 42 associée au module de connexion 60 courant et transmettre les données lues au module de connexion précédent, ou
- « Ecriture » : pour recevoir des données du module de connexion précédent et écrire les données reçues dans la mémoire 42 associée au module de connexion 60 courant, ou
- « Défaut » : pour recevoir des données du module de connexion précédent et transférer les données reçues vers le bloc de routage inférieur 62b du module de connexion 60 courant.

Le bloc de routage inférieur 62b peut être configuré dans les modes suivants :
- « Lecture » : pour lire des données dans la mémoire 42 associée au module de connexion 60 courant et transmettre les données lues au module de connexion suivant, ou
- « Ecriture » : pour recevoir des données du module de connexion suivant et écrire les données reçues dans la mémoire 42 associée au module de connexion 60 courant, ou
- « Défaut » : pour recevoir des données du module de connexion suivant et transférer les données reçues vers le bloc de routage supérieur 62a du module de connexion 60 courant.

Il convient de noter que, pour des raisons de simplification, les signaux de contrôle avec la mémoire 42 (signaux de contrôle conventionnels permettant par exemple d'indiquer le type d'accès (lecture ou écriture) et l'adresse visée) ne sont pas représentés sur les figures 7 et 8.

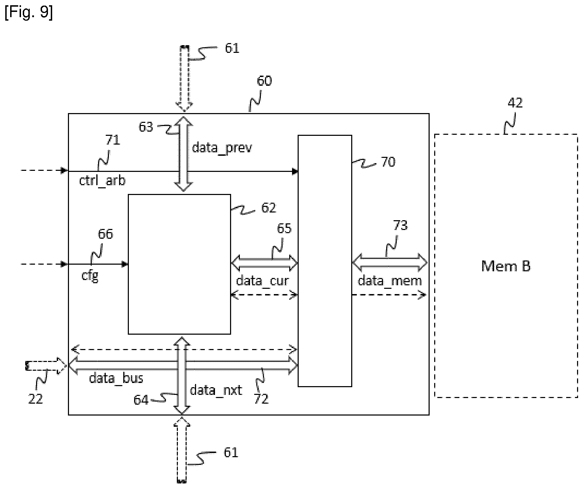

Dans des modes particuliers de réalisation, et tel qu'illustré sur la figure 9, le module de connexion 60 peut comporter un module d'arbitrage 70 permettant de gérer une priorité d'accès à la mémoire 42 associée au module de connexion 60. La priorité est gérée entre :
- un transfert « dédié » impliquant un module de connexion 60 voisin (module de connexion précédent ou suivant),
- un transfert « bus » impliquant le bus d'interconnexion 22.

Tel qu'illustré sur la figure 9, le module d'arbitrage 70 peut échanger (lire ou écrire) des données avec le bus d'interconnexion 22 via un lien de routage 72 bidirectionnel data_bus. Le module d'arbitrage 70 peut échanger des données avec la mémoire associée au module de connexion 60 via un lien de routage 73 bidirectionnel data_mem.

Le processeur hôte 21 peut en effet utiliser le module de contrôle d'accès mémoire 50 pour échanger des données avec la mémoire B d'une unité de calcul 41 du processeur de traitement parallèle 40, en passant par le bus d'interconnexion 22, sans passer par un lien d'interface dédié 61 reliant deux modules de connexion 60 voisins ; c'est ce qu'on appelle un transfert « bus ». Dans ce cas les données transitent sur bus d'interconnexion 22 et sur les liens de routage 72 data_bus et 73 data_mem.

Le processeur hôte 21 peut également utiliser le module de contrôle d'accès mémoire 50 pour transférer des données entre la mémoire A et une mémoire B d'au moins une unité de calcul 41 du processeur de traitement parallèle 40, en passant par les liens d'interface dédié 61 reliant les modules de connexion 60 entre eux, sans passer par le bus d'interconnexion 22 ; c'est ce qu'on appelle un transfert « dédié ». Dans ce cas, les données transitent sur des liens d'interface dédiés 61, sur des liens de routage 63 data_prev ou 64 data_nxt, et sur les liens de routage 65 data_cur et 73 data_mem.

En cas d'accès concurrentiel à la mémoire, pour un transfert « dédié » sur le lien de routage 65 data_cur et pour un transfert « bus » sur le lien de routage 72 data_bus, le module d'arbitrage 70 permet de gérer la priorité d'accès à la mémoire, de sorte à n'autoriser qu'un seul transfert à la fois parmi les deux transferts concurrentiels (ou autrement dit pour interdire un accès simultané à la mémoire pour ces deux transferts concurrentiels).

Tel qu'illustré sur la figure 9, un lien de contrôle 71 ctrl_arb permet au module de contrôle d'accès mémoire 50 de configurer le module d'arbitrage 70. Des signaux de contrôle (représentés par des flèches en pointillé sur la figure 9) sont associés respectivement au lien de routage 65 data_cur, au lien de routage 72 data_bus et au lien de routage 73 data_mem. Ces signaux de contrôle permettent, de façon conventionnelle, d'indiquer le type d'accès à la mémoire (lecture ou écriture) et l'adresse visée. En outre, un signal de retour géré par le module d'arbitrage 70 permet d'indiquer au module de routage 62 (respectivement au bus d'interconnexion 22) s'il est autorisé à accéder à la mémoire associée au module de connexion 60. Les signaux de retour prennent par exemple la valeur '1' par défaut ; le signal de retour associé au lien de routage data_cur passe à la valeur '0' lorsqu'un transfert « bus » est en cours ; le signal de retour associé au lien de routage data_bus passe à la valeur '0' lorsqu'un transfert « dédié » est en cours).

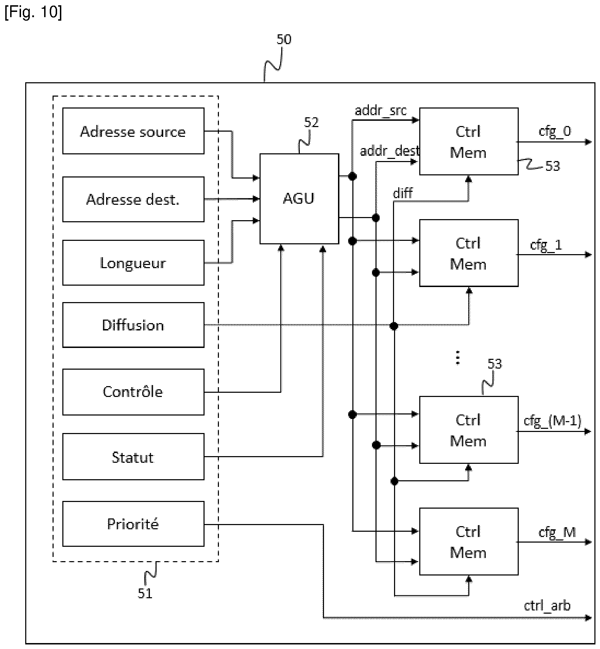

La figure 10 représente schématiquement un exemple de réalisation du module de contrôle d'accès mémoire 50 (DMPA) du système 20 de calcul décrit en référence aux figures 2, 4 et 5.

Le module de contrôle d'accès mémoire 50 comporte un ensemble 51 de registres de configuration, avec par exemple :
- un registre « Adresse source » pour indiquer l'adresse mémoire source du transfert,
- un registre « Adresse dest. » pour indiquer l'adresse mémoire de destination du transfert,
- un registre « Longueur » pour indiquer la longueur du transfert (par exemple en nombre d'octets),
- un registre « Diffusion » pour traiter le cas où les données doivent être transférées vers plusieurs destinataires (« broadcast »),
- un registre « Contrôle » pour initier le transfert,
- un registre « Statut » pour fournir des informations sur le transfert en cours, et notamment pour indiquer la fin du transfert,
- un registre « Priorité » pour gérer la priorité entre un transfert « bus » et un transfert « dédié ».

Le module de contrôle d'accès mémoire 50 comporte également une unité de génération d'adresse 52 (AGU, pour « Address Generator Unit »). L'AGU permet le calcul des adresses source et destination pendant toute la durée d'un transfert.

Dans l'exemple considéré, le module de contrôle d'accès mémoire 50 comporte également un module de contrôle 53 (Ctrl Mem) pour chaque ligne de modules de connexion 60. Chaque module de contrôle 53 est adapté pour configurer de façon identique tous les modules de connexion 60 d'une même ligne (c'est-à-dire tous les modules de connexion 60 présentant un même rang d'ordonnancement dans les différentes colonnes).

Il convient de noter que, dans une variante, on pourrait envisager de configurer différemment les modules de connexion 60 d'une même ligne ; il conviendrait toutefois pour cela d'implémenter plusieurs modules de contrôle pour une même ligne (par exemple un module de contrôle pour chaque module de connexion 60).

Chaque module de contrôle 53 prend en entrée une adresse source (signal addr_src), une adresse de destination (signal addr_dest) et des options de diffusion (signal diff), et fournit en sortie une configuration (signal cfg) destinée à chaque module de connexion 60.

Comme on l'a vu précédemment, le signal de contrôle ctrl_arb permet de configurer le module d'arbitrage 70.

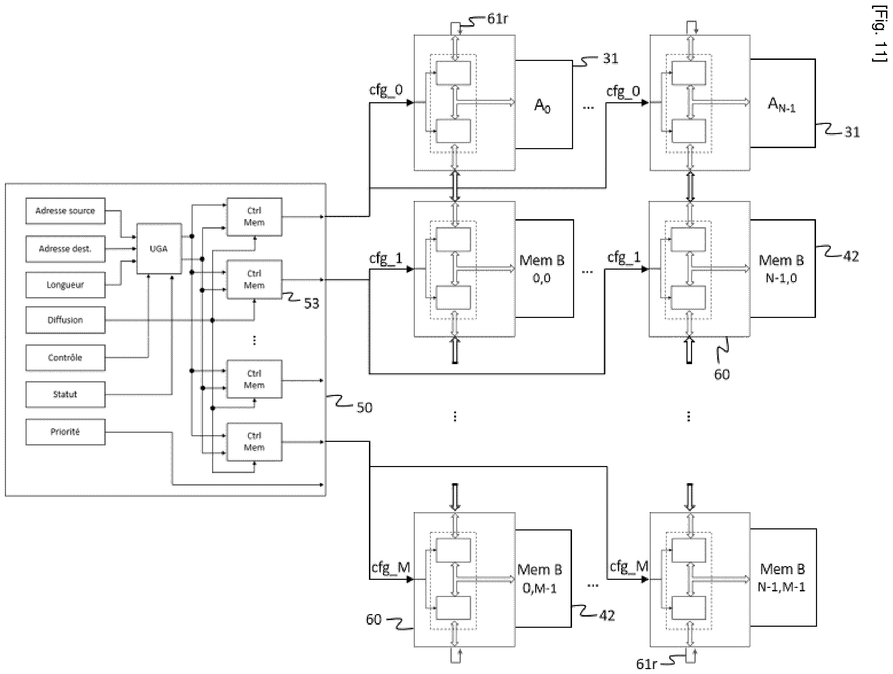

La figure 11 illustre schématiquement la configuration des différents modules de connexion 60 par les modules de contrôle 53 du DMPA 50.

Tel qu'illustré sur la figure 11, le signal cfg_0 correspond à la configuration des modules de connexion 60 associés aux partitions 31 de la mémoire A ; le signal cfg_1 correspond à la configuration des modules de connexion 60 associés aux mémoire B des premières unités de calcul des différentes colonnes ; le signal cfg_M correspond à la configuration des modules de connexion 60 associés aux mémoire B des dernières unités de calcul des différentes colonnes. La propagation du signal ctrl_arb vers les différents modules de connexion 60 n'est pas représentée sur la figure 11, par souci de clarté.

De façon avantageuse, dans l'exemple considéré, les modules de connexion 60 sont tous implémentés de façon identique ; les modules de contrôle 53 sont également tous implémentés de façon identique.

Tel qu'illustré sur la figure 11, on peut envisager d'utiliser un lien de rebouclage 61r pour relier le lien montant et le lien descendant du lien de routage data_prev du premier module de connexion 60 de chaque colonne, et pour relier le lien descendant et le lien montant du lien de routage data_nxt du dernier module de connexion 60 de chaque colonne. De telles dispositions permettent de gérer certains scénarios particuliers de diffusion de données depuis la mémoire B d'une unité de calcul 41 à la fois vers la mémoire B d'au moins une autre unité de calcul 41 et vers la mémoire A.

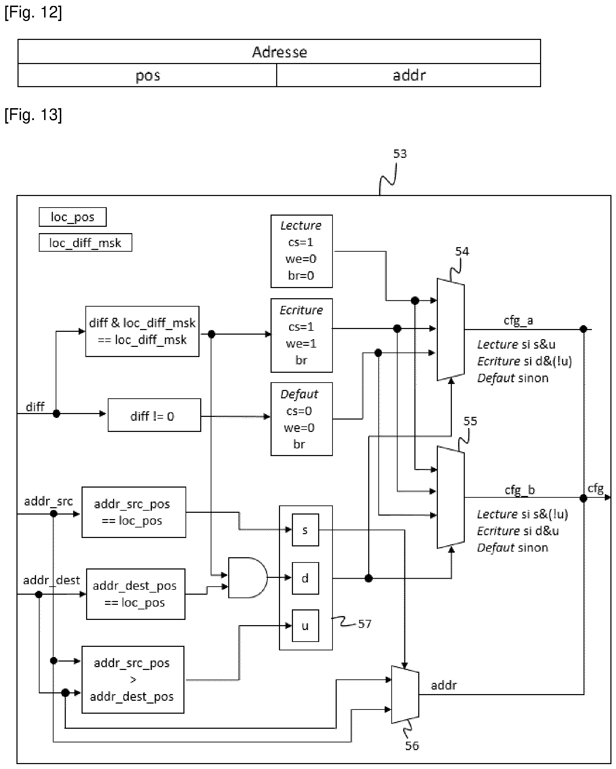

La figure 12 représente schématiquement les champs formant une adresse source ou une adresse destination en entrée d'un module de contrôle 53 (adresse fournie via le signal addr_src ou le signal addr_dest). L'adresse comporte notamment un champ « pos » indiquant la position de la mémoire visée, et un champ « addr » indiquant l'adresse mémoire locale dans la mémoire visée. Dans l'exemple considéré, le champ addr est codé par des bits de poids faible ; le champ pos est codé par des bits de poids fort. Dans l'exemple considéré, tous les modules de connexion 60 d'une même ligne sont configurés de façon identique (ou autrement dit tous les modules de connexion 60 positionnés à une même position dans une colonne sont configurés de façon identique) ; il suffit donc que le champ pos indique la position dans la colonne. Par exemple, le champ pos prend la valeur '0' pour indiquer la partition 31 de la mémoire A associée à la colonne ; le champ pos prend la valeur '1 ' pour indiquer la mémoire B de la première unité de calcul 41 de la colonne ; ... ; le champ pos prend la valeur 'M' pour indiquer la mémoire B de la dernière unité de calcul 41 de la colonne.

La figure 13 représente schématiquement un exemple de réalisation d'un module de contrôle 53 du DMPA 50. Chaque module de contrôle 53 mémorise sa position via un registre « loc_pos ». Tel qu'illustré sur la figure 13, différents blocs de logique permettent de déterminer, à partir des signaux addr_src et addr_dest et à partir du registre loc_pos, si la mémoire associée à un module de connexion 60 configuré par le module de contrôle 53 est une source ou une destination pour le transfert, ainsi que le sens (montant ou descendant) du transfert.

En particulier, si addr_src_pos (valeur du champ pos de addr_src) est égal à loc_pos, alors la mémoire associée à un module de connexion 60 configuré par le module de contrôle 53 est une source pour le transfert considéré (il faudra effectuer une lecture dans cette mémoire) ; le signal s est alors activé (il est mis à la valeur '1') dans le bloc de logique 57 (sinon il est mis à la valeur '0').

Si addr_dest_pos (valeur du champ pos de addr_dest) est égal à loc_pos, alors la mémoire associée à un module de connexion 60 configuré par le module de contrôle 53 est une destination pour le transfert considéré (il faudra effectuer une écriture dans cette mémoire) ; le signal d est alors mis à la valeur '1' dans le bloc de logique 57 (sinon il est mis à la valeur '0').

Si addr_src_pos est strictement supérieur à addr_dest_pos, alors il s'agit d'un transfert descendant ; le signal u est alors mis à '0' dans le bloc de logique 57. Sinon, il s'agit d'un transfert montant ; le signal u est alors mis à '1' dans le bloc de logique 57.

Un module de routage 62 peut alors être configuré en fonction des signaux s, d et u. Plus particulièrement, le bloc de routage supérieur 62a est configuré (signal cfg_a en sortie du multiplexeur 54 sur la figure 13) :
- en mode « Lecture » si les signaux s et u sont tous les deux activés (c'est-à-dire s'ils prennent tous les deux la valeur '1'),
- en mode « Ecriture » si le signal d est activé et le signal u est désactivé,
- en mode « Défaut » sinon.

Le bloc de routage inférieur 62b est configuré (signal cfg_b en sortie du multiplexeur 55 sur la figure 13) :
- en mode « Lecture » si le signal s est activé et le signal u est désactivé,
- en mode « Ecriture » si les signaux d et u sont tous les deux activés,
- en mode « Défaut » sinon.

Tel qu'illustré sur la figure 13, une configuration d'un bloc de routage supérieur ou inférieur comprend un signal de contrôle cs (« chip select ») et un signal de contrôle we (« write enable »). En mode « Lecture » le signal cs est activé et le signal we est désactivé ; en mode « Ecriture » le signal cs et le signal we sont tous les deux activés ; en mode « Défaut », le signal cs et le signal we sont tous les deux désactivés. La configuration comporte également un signal addr indiquant l'adresse locale visée pour la lecture (si le signal s est activé, il s'agit alors du champ addr de addr_src) ou pour l'écriture (si le signal d est activé, il s'agit alors du champ addr de addr_dest).

Lorsqu'un transfert de données nécessite d'écrire des données dans les mémoires associées à plusieurs modules de connexion 60 d'une même colonne (diffusion des données vers plusieurs destinataires au sein d'une même colonne), le signal diff comporte des informations sur les modules de connexion 60 impliqués par ces écritures multiples. Par exemple, le signal diff fournit une information codée sous la forme d'un champ de bits comportant autant de bits qu'il y a de modules de connexion 60 par colonne. Chaque bit du champ de bits est associé respectivement à une position d'un module de connexion 60 dans la colonne (par exemple le premier bit de poids faible correspond au module de connexion 60 associée à la partition 31 de la mémoire A, le deuxième bit de poids faible correspond au premier module de connexion 60 d'une colonne, ..., le (M+1)^{ème} bit de poids faible correspond au dernier module de connexion 60 d'une colonne). La valeur d'un bit du champ de bits prend la valeur '1' si le module de connexion 60 correspondant est impliqué par une écriture multiple (c'est-à-dire s'il fait partie des destinataires pour le transfert considéré). Sinon, le bit prend la valeur '0'.

Tel qu'illustré sur la figure 13, un masque loc_diff_msk peut être mémorisé dans un registre du module de contrôle 53 pour vérifier si les modules de connexion 60 qu'ils configurent sont impliqués par une écrite multiple (par exemple par comparaison bit à bit de diff et loc_diff_msk). Si c'est le cas, alors le signal d est activé.

Outre les signaux cs et we, la configuration d'un bloc de routage supérieur 62a ou inférieur 62b comprend un signal de contrôle br (« broadcast »). Ce signal est toujours désactivé (il prend la valeur '0') en mode « Lecture ». Ce signal est activé (il prend la valeur `1') en mode « Ecriture » ou en mode « Défaut » lorsque le signal diff indique que le transfert implique plusieurs destinataires.

Considérons, un premier exemple de transfert pour un cas avec M = 2, c'est-à-dire deux unités de calcul 41 par colonne (c'est-à-dire trois modules de connexion 60 par colonne). Pour ce premier exemple de transfert :
- pour chaque colonne d'indice i, un transfert parallèle de données de l'unité de calcul UC_{i,1} vers la partition Aᵢ doit être effectué ;
- addr_src = h0002_0100 (pos = 2 et addr = h0100), cela signifie que pour chaque unité de calcul UC_{i,1}, les données doivent être lues dans une région à l'adresse locale h0100 de la mémoire B de l'unité de calcul ;
- addr_dest = h0000_0000 (pos = 0 et addr = h0000), cela signifie que dans chaque partition, les données doivent être écrites dans une région située à l'adresse locale h0000 de la partition,
- diff = b000, cela signifie qu'il n'y pas de diffusion des données à plusieurs destinataires (dans chaque colonne la partition Aᵢ est le seul destinataire).

Dans ces conditions, dans chaque colonne, le bloc de routage supérieur du dernier module de connexion (troisième module de connexion) est configuré dans le mode « Lecture », les blocs de routage inférieur et supérieur du module de connexion intermédiaire (deuxième module de connexion) sont configurés dans le mode « Défaut », et le bloc de routage inférieur du premier module de connexion est configuré dans le mode « Ecriture ». Le module de routage supérieur du premier module de connexion et le module de routage inférieur du dernier module de connexion sont configurés dans le mode « Défaut ».

Considérons, un deuxième exemple de transfert pour un cas avec M = 2, pour lequel :
- pour chaque colonne d'indice i, un transfert parallèle de données de la partition Ai vers les deux unités de calcul UC_{i,0} et UC_{i,1} de la colonne doit être effectué,
- addr_src = h0000_0100 (pos = 0 et addr = h0100), cela signifie que pour chaque partition, les données à transférer doivent être lues dans une région à l'adresse locale h0100 de la partition,
- addr_dest = h0001_0050 (pos = 1 et addr = h0050), cela signifie que dans chaque colonne, les données doivent être écrite dans une région mémoire située à l'adresse locale h0050 de la mémoire B de la première unité de calcul,
- diff = b110, cela signifie que dans chaque colonne les données doivent être diffusées à plusieurs destinataires, à savoir les deux unités de calcul UC_{i,0} et UC_{i,1} de la colonne.

Dans ces conditions, dans chaque colonne, le bloc de routage inférieur du premier module de connexion (troisième module de connexion) est configuré dans le mode « Lecture », le bloc de routage supérieur du deuxième module de connexion intermédiaire est configuré dans le mode « Ecriture », le bloc de routage inférieur du deuxième module de connexion est configuré dans le mode « Défaut », le bloc de routage supérieur du troisième module de connexion est configuré dans le mode « Ecriture ». Le module de routage supérieur du premier module de connexion et le module de routage inférieur du dernier module de connexion sont configurés dans le mode « Défaut ».

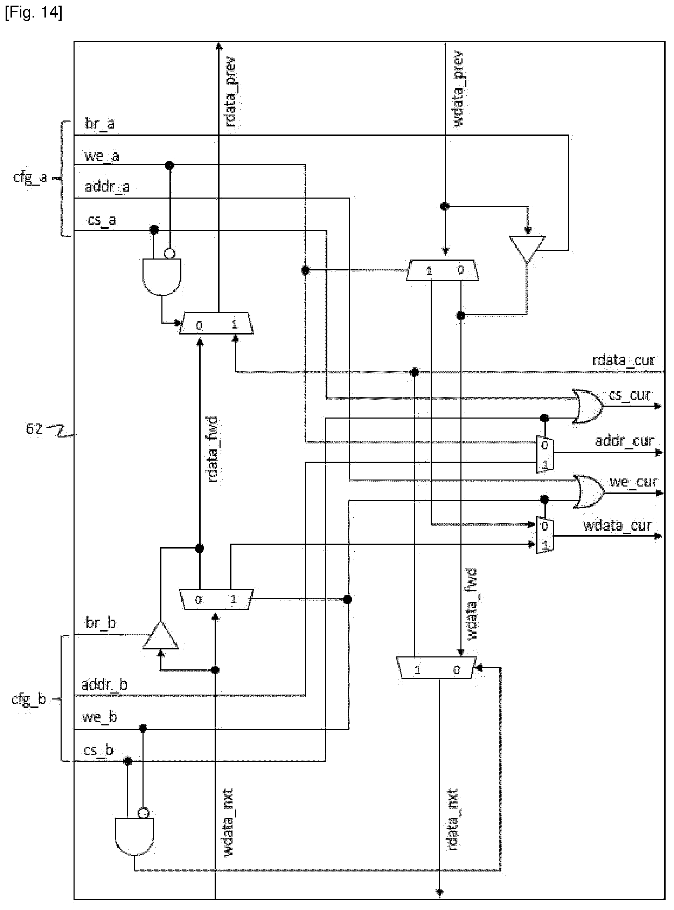

La figure 14 représente schématiquement un exemple de réalisation du module de routage 62. Un bloc de routage supérieur (partie haute du module de routage 62 sur la figure) est configuré par un module de contrôle 53 du DMPA 50 via le signal cfg_a ; un bloc de routage inférieur (partie basse du module de routage 62 sur la figure) est configuré par le module de contrôle 53 via le signal cfg_b. Les signaux de contrôle relatifs au bloc de routage supérieur sont nommés avec le suffixe « _a » (cs_a, addr_a, we_a et br_a), tandis que les signaux de contrôle relatifs au bloc de routage inférieur sont nommés avec le suffixe « _b » (cs_b, addr_b, we_b et br_b). En référence à la figure 9, les liens rdata_prev et wdata_prev correspondent respectivement au lien montant et au lien descendant du lien de routage 63 data_prev ; les liens wdata_nxt et rdata_nxt correspondent respectivement au lien montant et au lien descendant du lien de routage 64 data_nxt ; les liens wdata_cur et rdata_cur correspondent respectivement au lien montant et au lien descendant du lien de routage 65 data_cur.

Lorsque le bloc de routage supérieur est configuré en mode « Ecriture », les données arrivant sur le lien wdata_prev sont routées vers le lien wdata_cur, et les signaux de contrôle cs_cur, we_cur et addr_cur correspondent respectivement aux signaux de contrôle cs_a, we_a et addr_a.

Lorsque le bloc de routage supérieur est configuré en mode « Lecture », les signaux de contrôle cs_cur, we_cur et addr_cur correspondent respectivement aux signaux de contrôle cs_a, we_a et addr_a, et les données lues dans la mémoire associée au module de routage 62 sont routées du lien rdata_cur vers le lien rdata_prev.

Lorsque le bloc de routage supérieur est configuré en mode « Défaut », si une diffusion des données doit avoir lieu (dans ce le signal de contrôle br_b est activé), alors les données arrivant sur le lien rdata_fwd (en provenance du module de connexion suivant) sont routées vers le lien rdata_prev.

Un fonctionnement similaire a lieu au niveau du bloc de routage inférieur. Lorsque le bloc de routage inférieur est configuré en mode « Ecriture », les données arrivant sur le lien wdata_nxt sont routées vers le lien wdata_cur, et les signaux de contrôle cs_cur, we_cur et addr_cur correspondent respectivement aux signaux de contrôle cs_b, we_b et addr_b.

Lorsque le bloc de routage inférieur est configuré en mode « Lecture », les signaux de contrôle cs_cur, we_cur et addr_cur correspondent respectivement aux signaux de contrôle cs_b, we_b et addr_b, et les données lues dans la mémoire associée au module de routage 62 sont routées du lien rdata_cur vers le lien rdata_nxt.

Lorsque le bloc de routage inférieur est configuré en mode « Défaut », si une diffusion des données doit avoir lieu (dans ce le signal de contrôle br_a est activé), alors les données arrivant sur le lien wdata_fwd (en provenance du module de connexion précédent) sont routées vers le lien rdata_nxt.

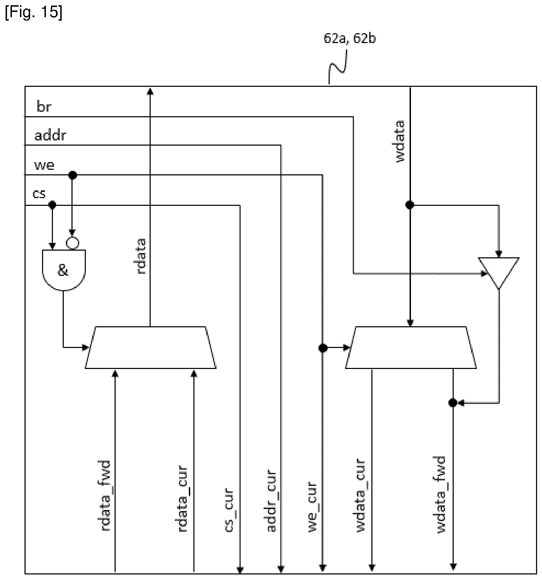

Les figures 15 à 20 correspondent à un deuxième mode de réalisation d'un module de routage 62.

La figure 15 représente schématiquement un exemple de réalisation d'un bloc de routage supérieur 62a ou d'un bloc de routage inférieur 62b pour ce deuxième mode de réalisation (le bloc de routage supérieur 62a et le bloc de routage inférieur 62b sont tous les deux implémentés de façon identique). Les signaux rdata et wdata correspondent respectivement aux signaux rdata_prev et wdata_prev dans le cas d'un bloc de routage supérieur. Les signaux rdata et wdata correspondent respectivement aux signaux rdata_nxt et wdata_nxt dans le cas d'un bloc de routage inférieur.

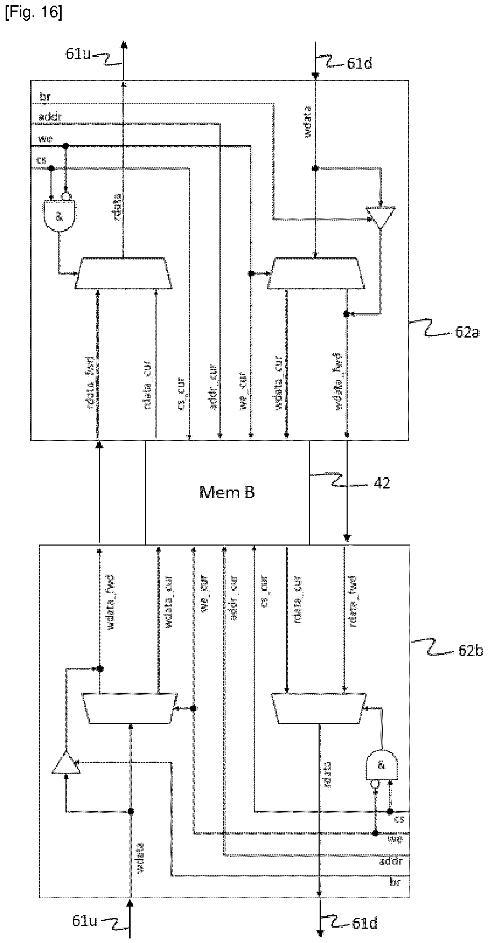

La figure 16 représente la réalisation d'un module de connexion intermédiaire pour une mémoire B d'une unité de calcul 41 en connectant un bloc de routage supérieur 62a et un bloc de routage inférieur 62b à une mémoire B d'une unité de calcul 41. La référence 61u (respectivement 61d) correspond à un lien montant (respectivement descendant) d'un lien d'interface dédié 61 avec un module de connexion voisin.

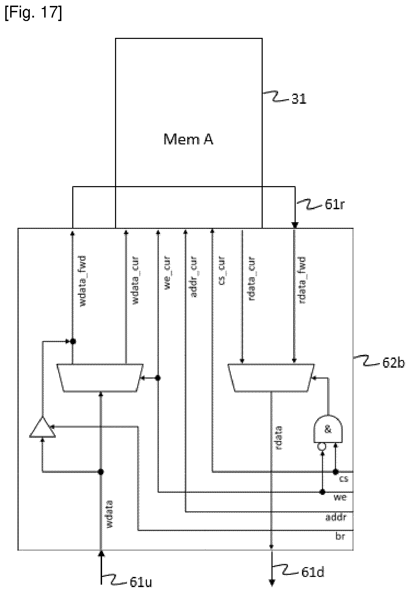

La figure 17 représente la réalisation d'un premier module de connexion (en tête de colonne) en connectant un bloc de routage inférieur 62b à une partition 31 de la mémoire A.

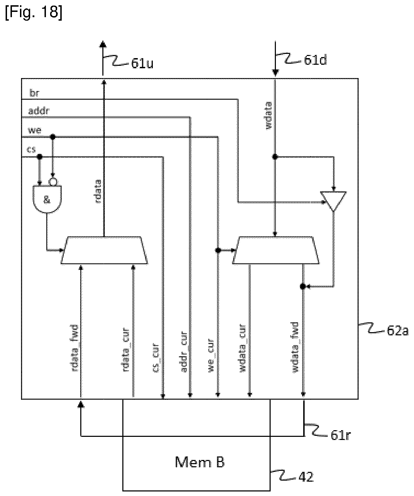

La figure 18 représente la réalisation d'un dernier module de connexion (en pied de colonne) en connectant un bloc de routage supérieur 62b à la mémoire B de la dernière unité de calcul 41 de la colonne.

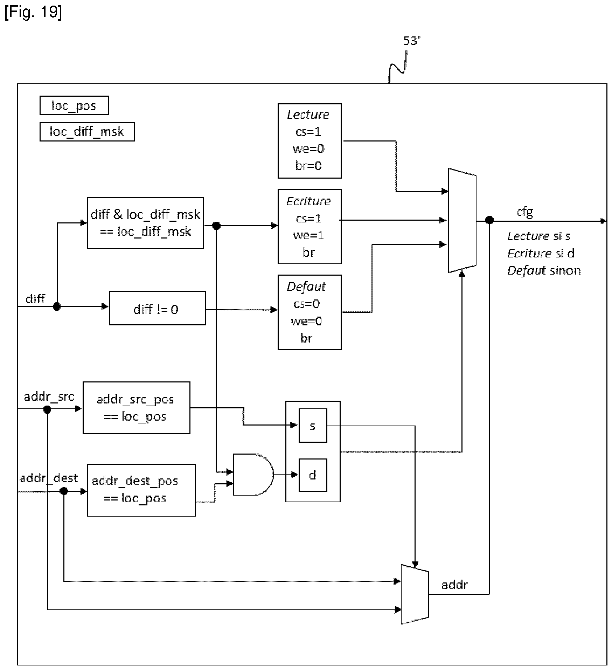

Dans ce deuxième mode de réalisation, les modules de connexion en tête et en pied de colonne ne comportent qu'un seul bloc de routage (contrairement aux modules de connexion intermédiaires qui en comportent deux). Il est donc possible de simplifier le module de contrôle 53' qui configure les modules de connexion en tête ou en pied de colonne, comme illustré sur la figure 19.

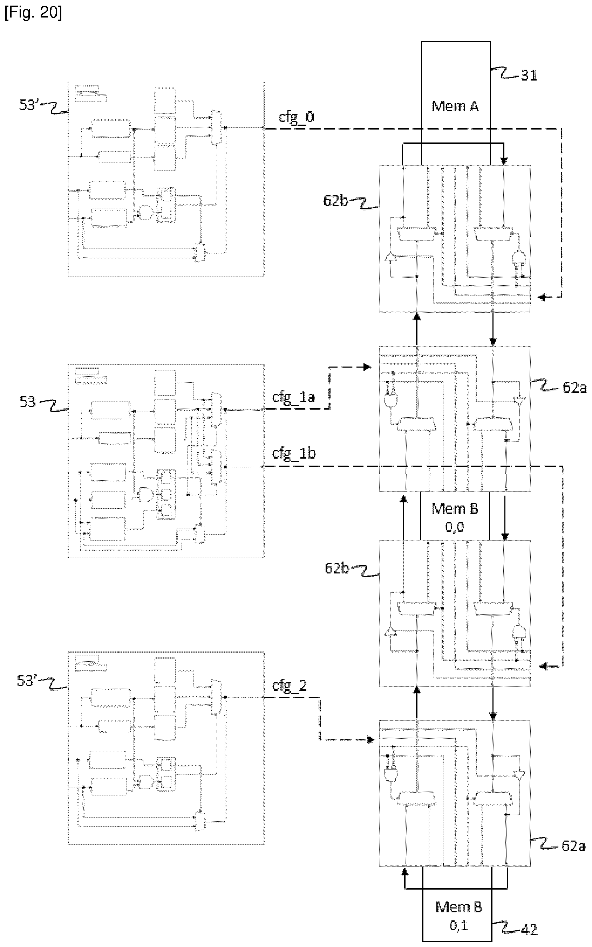

La figure 20 illustre la configuration de trois modules de connexion d'une colonne selon le deuxième mode de réalisation décrit ci-avant.

## Revendications

1. Système (20) de calcul comportant une mémoire (30), dite « mémoire A », un module de contrôle d'accès mémoire (50), et un processeur de traitement parallèle (40) comportant une pluralité d'unités de calcul (41), chaque unité de calcul (41) comportant un ou plusieurs processeurs élémentaires (43) et une mémoire (42), dite « mémoire B », partagée par lesdits processeurs élémentaires (43),
les unités de calcul (41) du processeur de traitement parallèle (40) sont agencées en plusieurs colonnes et, dans chaque colonne, les unités de calcul (41) sont ordonnées d'une première unité de calcul jusqu'à une dernière unité de calcul, avec zéro, une ou plusieurs unités de calcul intermédiaires entre la première unité de calcul et la dernière unité de calcul, la première unité de calcul correspondant à la dernière unité de calcul lorsque la colonne ne comporte qu'une seule unité de calcul ;
le système (20) de calcul est **caractérisé en ce que** la mémoire A est partitionnée de sorte à associer une partition (31) de la mémoire A à chaque colonne d'unités de calcul (41) et, pour chaque colonne :
le système (20) de calcul comporte des modules de connexion (60) ordonnés d'un premier module de connexion connecté à la partition (31) de la mémoire A, jusqu'à un dernier module de connexion connecté à la mémoire B de la dernière unité de calcul, avec zéro, un ou plusieurs modules de connexion intermédiaires entre le premier module de connexion et le dernier module de connexion, chaque module de connexion intermédiaire étant connecté à la mémoire B d'une unité de calcul,
le premier module de connexion présente un lien d'interface dédié (61) avec le module de connexion suivant, chaque module de connexion intermédiaire présente un lien d'interface dédié (61) d'une part avec le module de connexion précédent et d'autre part avec le module de connexion suivant, le dernier module de connexion présente un lien d'interface dédié (61) avec le module de connexion précédent ;
le module de contrôle d'accès mémoire (50) est adapté pour configurer les modules de connexion (60) pour faire un premier transfert de données, pour une première colonne, entre la partition (31) de la mémoire A associée à ladite première colonne et une mémoire B d'au moins une unité de calcul (41) de ladite première colonne et, simultanément au premier transfert, faire au moins un deuxième transfert de données, pour une deuxième colonne, entre la partition (31) de la mémoire A associée à ladite deuxième colonne et une mémoire B d'au moins une unité de calcul (41) de ladite deuxième colonne, lesdits transferts de données étant effectués en passant par les liens d'interface dédiés (61) reliant les modules de connexion (60) entre eux.

2. Système (20) de calcul selon la revendication 1, pour lequel le premier transfert de données permet de transférer des données de la partition (31) de la mémoire A associée à la première colonne vers les mémoires B de plusieurs unités de calcul (41) différentes de la première colonne, en passant au plus une fois par le module de connexion (60) de chaque unité de calcul (41) de la première colonne.

3. Système (20) de calcul selon l'une quelconque des revendications 1 à 2, dans lequel le module de contrôle d'accès mémoire (50) est adapté pour configurer les modules de connexion (60) pour faire un transfert de données, pour au moins une colonne, depuis une mémoire B d'une unité de calcul (41) de ladite colonne vers une mémoire B d'au moins une autre unité de calcul (41) de ladite colonne.

4. Système (20) de calcul selon l'une quelconque des revendications 1 à 3, dans lequel le module de contrôle d'accès mémoire (50) est adapté pour configurer les modules de connexion (60) pour faire des transferts de données simultanés impliquant plusieurs colonnes avec, pour chaque colonne impliquée, un transfert de données d'une région de la partition (31) située à une adresse locale de source identique pour toutes les colonnes impliquées, vers une région d'une mémoire B d'au moins une unité de calcul (41), ladite région étant située à une adresse locale de destination identique pour toutes les colonnes impliquées.

5. Système (20) de calcul selon l'une quelconque des revendications 1 à 4, dans lequel le module de contrôle d'accès mémoire (50) est adapté pour configurer les modules de connexion (60) pour faire des transferts de données simultanés impliquant plusieurs colonnes avec, pour chaque colonne impliquée, un transfert de données d'une région d'une mémoire B d'une unité de calcul (41), ladite région étant située à une adresse locale de source identique pour toutes les colonnes impliquées, vers une région de la partition (31) située à une adresse locale de destination identique pour toutes les colonnes impliquées.

6. Système (20) de calcul selon l'une quelconque des revendications 1 à 5, dans lequel chaque module de connexion (60) intermédiaire comporte un bloc de routage supérieur (62a) et un bloc de routage inférieur (62b),
le bloc de routage supérieur (62a) pouvant être configuré dans les modes suivants :
- « Lecture » : pour lire des données dans la mémoire B à laquelle le module de connexion intermédiaire est connecté et transmettre les données lues au module de connexion précédent, ou
- « Ecriture » : pour recevoir des données du module de connexion précédent et écrire les données reçues dans la mémoire B à laquelle le module de connexion intermédiaire est connecté, ou
- « Défaut » : pour recevoir des données du module de connexion précédent et transférer les données reçues vers le bloc de routage inférieur (62b) du module de connexion intermédiaire,
le bloc de routage inférieur (62b) pouvant être configuré dans les modes suivants :
- « Lecture » : pour lire des données dans la mémoire B à laquelle le module de connexion intermédiaire est connecté et transmettre les données lues au module de connexion suivant, ou
- « Ecriture » : pour recevoir des données du module de connexion suivant et écrire les données reçues dans la mémoire B à laquelle le module de connexion intermédiaire est connecté, ou
- « Défaut » : pour recevoir des données du module de connexion suivant et transférer les données reçues vers le bloc de routage supérieur (62a) du module de connexion intermédiaire.

7. Système (20) de calcul selon l'une quelconque des revendications 1 à 6, dans lequel :
le premier module de connexion (60) comporte un bloc de routage inférieur (62b) pouvant être configuré dans les modes suivants :
- « Lecture » : pour lire des données dans la mémoire A et transmettre les données lues au module de connexion suivant,
- « Ecriture » : pour recevoir des données du module de connexion suivant et écrire des données reçues dans la mémoire A ;
le dernier module de connexion (60) comporte un bloc de routage supérieur (62a) pouvant être configuré dans les modes suivants :
- « Lecture » : pour lire des données dans la mémoire B du dernier module de connexion et transmettre les données lues au module de connexion précédent,
- « Ecriture » : pour recevoir des données du module de connexion précédent et écrire les données reçues dans la mémoire B du dernier module de connexion.

8. Système (20) de calcul selon l'une quelconque des revendications 1 à 7 dans lequel le module de contrôle d'accès mémoire (50) comporte au moins deux modules de contrôle (53), chaque module de contrôle (53) étant adapté pour configurer de façon identique tous les modules de connexion (60) présentant un même rang d'ordonnancement dans les différentes colonnes.

9. Système (20) de calcul selon la revendication 8 dans lequel les modules de connexion (60) sont tous implémentés de façon identique, et les modules de contrôle (53) sont tous implémentés de façon identique.

10. Système (20) de calcul selon l'une quelconque des revendications 1 à 9 comprenant un processeur hôte (21) et un bus d'interconnexion (22), les partitions (31) de la mémoire A étant définies avec un mappage d'adresse contigüe, la mémoire A comprenant des instructions de code de programme pour configurer le processeur hôte (21), les instructions de code de programme étant mémorisées dans une région de la mémoire A distincte des partitions (31).

11. Système (20) de calcul selon l'une quelconque des revendications 1 à 10 comprenant un processeur hôte (21) et un bus d'interconnexion (22),
le processeur hôte (21) étant adapté pour configurer le module de contrôle d'accès mémoire (50) pour échanger des données avec la mémoire A ou avec une mémoire B d'au moins une unité de calcul (41) du processeur de traitement parallèle (40), en passant par le bus d'interconnexion (22), sans passer par un lien d'interface dédié (61) reliant deux modules de connexion (60) voisins,
chaque module de connexion (60) comporte un module d'arbitrage (70) pour gérer une priorité d'accès à la mémoire à laquelle le module de connexion (60) est connecté, entre:
- un transfert « dédié » impliquant un module de connexion (60) voisin,
- un transfert « bus » impliquant le bus d'interconnexion (22).
